# EUROPEAN PATENT APPLICATION

(11) **EP 2 657 555 A2**
(43) Date of publication of application: **30.10.2013**
(21) Application number: 13165655.5
(22) Date of filing: 26.04.2013
(51) Int. Cl.: F16C 33/372, F16C 19/28, F16C 33/58, F16C 19/52

(54) **High-capacity light-weight ball bearing for airborne vibration suppression**

(30) Priority: 27.04.2012 US 201261639261 P
(71) Applicant: Roller Bearing Company of America, Inc., Oxford, CT 06478 (US)
(72) Inventor: Habibvand, Alex, Orange, CA 92867 (US)
(74) Representative: Regimbeau

(57) **Abstract**

A bearing for a hub-mounted vibration suppression system includes an outer ring defining a first outer race and a second outer race. A first inner ring and a second inner ring are disposed in the outer ring. A plurality of rolling elements is disposed between the first inner race and the first outer race. A slug separator separates each adjacent pair of the plurality of the rolling elements. Another plurality of rolling elements is disposed between the second inner race and the second outer race. Another slug separator separates each adjacent pair of the other rolling elements. Each of the plurality rolling elements have first centers that are spaced apart from one another by no more than 15 degrees and/or each of the plurality other rolling elements have second centers that are spaced apart from one another by no more than 15 degrees.

## Description

### CROSS REFERENCE TO RELATED APPLICATIONS

This application is a continuation in part of copending U.S. Patent Application No. 12/967,400, entitled "Ball Bearing and Pump for Cryogenic Use," filed December 14, 2010 which is a continuation in part of U.S. patent application No. 12/204,886, filed September 5, 2008, which claims priority benefit of U.S. provisional application number 60/967,540 filed September 5, 2007, the contents of which are incorporated herein by reference in their entirety.

This application is a continuation in part of copending U.S. Patent Application No. 13/475,097, entitled "Nutating Swash Plate Ball Bearing Assembly," filed May 18, 2012, which claims priority benefit to U.S. Provisional Patent Application No. 61/487,843 filed on May 19, 2011 and U.S. Provisional Patent Application No. 61/521,823 filed on August 10, 2011, the contents of which are incorporated herein by reference in their entirety.

This application claims the benefit of U.S. Provisional Patent Application No. 61/639,261 filed on April 27, 2012, the contents of which are incorporated herein by reference in its entirety.

### FIELD OF THE INVENTION

The present invention relates generally to a double row ball bearing having slug separators disposed between adjacent balls, and in particular to a double row ball bearing with balls separated by no more than fifteen degrees.

### BACKGROUND OF THE INVENTION

Many types of bearings can be used to support radial, thrust, or combination radial and thrust loads. Such bearings include ball, roller, plain, journal and tapered roller bearings. Typically, roller bearings include an outer ring having a generally cylindrical exterior surface and a generally cylindrical inner surface defining an interior area of the outer ring. An inner ring having a generally cylindrical outside surface is disposed in the interior area of the outer ring. A plurality of rolling elements, such as balls or needle rollers are disposed in a cavity between the outside surface of the inner ring and the inner surface of the outer ring. The outer ring and/or the inner ring can rotate relative to one another. For example, the inner ring may be secured to a shaft and the outer ring can rotate relative to the inner ring and the shaft.

In some instances, the rolling elements are disposed in pockets defined by a cage to space the rolling elements apart from one another. The cage can cause drag and increase the torque required to operate the bearing. In addition, the cage takes up space in the cavity between the inner ring and the outer ring. As a result, the size of the balls that can be used in a particular bearing can be limited by the presence of the cage. Thus smaller balls that can support less load than higher load capacity larger balls, are typically used in such bearings.

Bearings are typically used in hub-mounted vibration suppression systems ("HMVSS"). A HMVSS may be employed, for example, on the hub of a helicopter to suppress vibrations generated during operation. An example of such a system is disclosed in U.S. Patent Application Publication No. 20110027081, which is hereby incorporated by reference. The HMVSS comprises motorized imbalanced rotors that rotate at the blade-pass frequency to create centrifugal forces. By phasing the rotors, the magnitude and orientation of the centrifugal forces can be harnessed to inhibit hub vibrations. The HMVSS includes a bearing to facilitate rotation of the imbalanced rotors.

### SUMMARY

According to aspects illustrated herein there is provided a bearing for a hub-mounted vibration suppression system (HMVSS). The bearing includes an outer ring defining a first outer race and a second outer race; a first inner ring disposed in the outer ring opposite the first outer race; and a second inner ring disposed in the outer ring opposite the second outer race. A plurality of first rolling elements is disposed in a first cavity defined between the first inner race and the first outer race. The bearing includes a plurality of first slug separators. One of the first slug separators is disposed between and separates each adjacent pair of the plurality of first rolling elements. A plurality of second rolling elements is disposed in a second cavity defined between the second inner race and the second outer race. The bearing includes a plurality of second slug separators. One of the second slug separators is disposed between and separates each adjacent pair of the plurality of second rolling elements. Each of the plurality of first rolling elements have first centers that are spaced apart from one another by no more than 15 degrees and/or each of the plurality of second rolling elements have second centers that are spaced apart from one another by no more than 15 degrees.

According to other aspects illustrated herein there is provided a bearing for a hub-mounted vibration suppression system. The bearing includes an outer ring that defines a first outer race and a second outer race. The first outer race defines a first arcuate surface and the second outer race defines second arcuate surface. A first inner ring is disposed in the outer ring opposite the first outer race. The first inner ring defines a first inner race. The first inner race defines a third arcuate surface. A second inner ring is disposed in the outer ring opposite the second outer race. The second inner ring defines a second inner race. The second inner race defines a fourth arcuate surface. A plurality of first rolling elements is disposed in a first cavity defined between the first inner race and the first outer race. Each of the plurality of first rolling elements has a first radius of curvature and a first circumference. The bearing includes a plurality of first slug separators. One of the first slug separators is disposed between and separates each adjacent pair of the plurality of first rolling elements. A plurality of second rolling elements is disposed in a second cavity defined between the second inner race and the second outer race. Each of the plurality of second rolling elements has a second radius of curvature and a second circumference. The bearing includes a plurality of second slug separators. One of the second slug separators is disposed between and separates each adjacent pair of the plurality of first rolling elements. At least 30 percent of the first circumference of at least one of the plurality of first rolling elements engages the first arcuate surface and at least 30 percent of the first circumference of at least one of the plurality of first rolling elements engages the third arcuate surface; and/or at least 30 percent of the second circumference of at least one of the plurality of second rolling elements engages the second arcuate surface and at least 30 percent of the second circumference of at least one of the plurality of second rolling elements engages the fourth arcuate surface.

According to other aspects illustrated herein there is provided a bearing for a hub-mounted vibration suppression system. The bearing includes an outer ring defining a first outer race and a second outer race. The first outer race defines a first radius of curvature and the second outer race defines second radius of curvature. A first inner ring is disposed in the outer ring opposite the first outer race. The first inner ring defines a first inner race. The first inner race defines a third radius of curvature. A second inner ring is disposed in the outer ring opposite the second outer race. The second inner ring defines a second inner race. The second inner race defines a fourth radius of curvature. A plurality of first rolling elements is disposed in a first cavity defined between the first inner race and the first outer race. Each of the plurality of first rolling elements has a fifth radius of curvature and a first circumference. The bearing incudes a plurality of first slug separators. One of the first slug separators is disposed between and separates each adjacent pair of the plurality of first rolling elements. A plurality of second rolling elements is disposed in a second cavity defined between the second inner race and the second outer race. Each of the plurality of second rolling elements has a sixth radius of curvature and a second circumference. The bearing includes a plurality of second slug separators. One of the second slug separators is disposed between and separates each adjacent pair of the plurality of first rolling elements. The bearing has a first aspect ratio defined by the fifth radius of curvature divided by one of the first radius of curvature and the third radius of curvature and/or the bearing has a second aspect ratio defined by the sixth radius of curvature divided by one of the second radius of curvature and the fourth radius of curvature. The first aspect ratio is at least 0.6 and/or the second aspect ratio is at least 0.6.

### BRIEF DESCRIPTION OF THE DRAWINGS

FIG. 1 is a side view of a bearing for a hub mounted vibration system in accordance with the present invention.

FIG. 2 is a cross-sectional view of the bearing for a hub mounted vibration system shown in FIG. 1

FIG. 3 is a cross-sectional view of a portion of the bearing for a hub mounted vibration system shown in FIG. 1.

FIG. 4 is a side view of a ball and slug separator for use with the bearing for a hub mounted vibration system shown in FIG. 1.

FIG. 5 is a cross sectional view of the bearing for a hub mounted vibration system of FIG. 1 shown with balancing magnets mounted therein and mounted on a hub mounted vibration system.

FIG. 6 is an enlarged schematic view of a portion of the bearing of FIG. 1.

### DESCRIPTION OF THE INVENTION

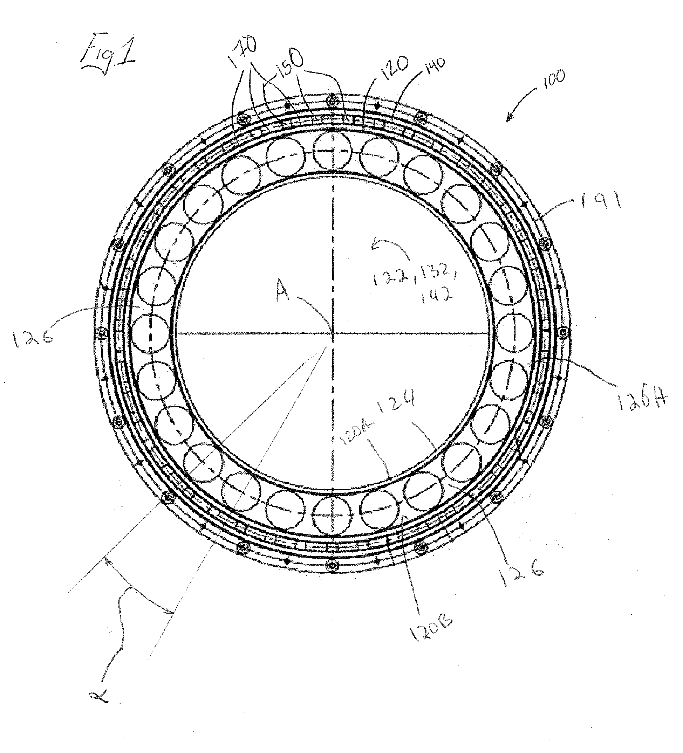

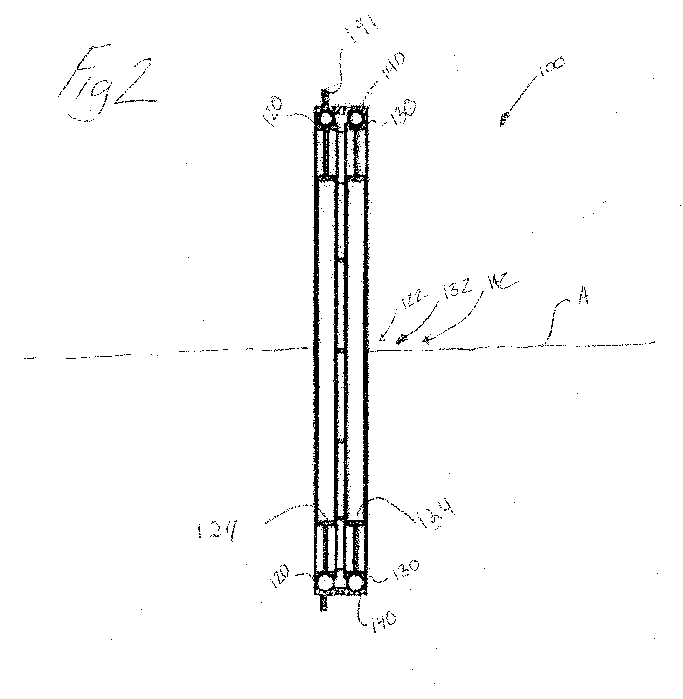

In reference to FIGS. 1-3, a light weight bearing 100 for use in airborne vibration suppression systems, for example, a hub-mounted vibration suppression system ("HMVSS") in accordance with the present invention is shown. The bearing 100 includes an outer ring 140. A first inner ring 120 is disposed in the outer ring 140 and a second inner ring 130 is disposed in the outer ring 140. In the embodiment shown in FIGS. 1-3, the first inner ring 120 and the second inner ring 130 are disposed in the outer ring 140 in a side-by-side configuration. The first inner ring 120 is laterally displaced from the second inner ring 130 by a distance D₁.

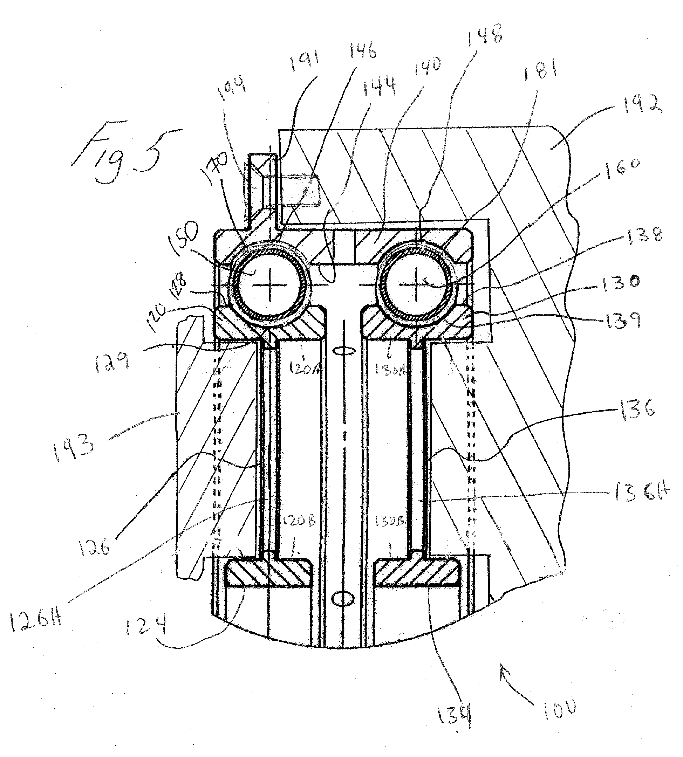

The first inner ring 120, the second inner ring 130, and the outer ring 140 are each generally annular and share a common central axis A. The first inner ring 120 has an annular configuration and defines a central aperture 122. An inner surface 124 of the first inner ring 120 generally defines a perimeter of the central aperture 122. The inner ring 120 has an I-beam cross section defined by a mounting web, for example a mount 126, extending between two flanges 120A and 120B. The mount 126 is configured to receive a balancing magnet assembly 193, for example one or more balancing magnets (as shown in FIG. 5). The mount 126 has a plurality of holes 126H formed therein for weight reduction purposes. The I-beam cross section also is of benefit for weight reduction purposes.

In the embodiment shown, the second inner ring 130 is configured in the same manner as the first inner ring 120, although, it should be understood that the present invention is not limited in this regard and different configurations are possible. The second inner ring 130 has an annular configuration and defines a central aperture 132. An inner surface 134 of the second inner ring 130 generally defines a perimeter of the central aperture 132. The inner ring 130 has an I-beam cross section defined by a mounting web, for example a mount 136, extending between two flanges 130A and 130B. The mount 136 is configured to receive at least a portion of the HMVSS 192 (as shown in FIG. 5) to facilitate rotation of a rotor (not shown). The HMVSS is secured with fasteners 194 (only one shown) to an exterior annular flange 191 extending radially outward from the outer ring 140 The second inner ring 130 has an outer surface 138 that defines a second inner race 139. The second inner ring 130 is disposed in the outer ring 140 opposite the second outer race 148. The mount 136 has a plurality of holes 136H formed therein for weight reduction purposes.

The outer ring 140 has an annular configuration and defines a central aperture 142 for receiving the first inner ring 120 and the second inner ring 130. The outer ring 140 has an inner surface 144. The inner surface 144 defines a first outer race 146 and a second outer race 148. The first inner ring 120 has an outer surface 128 that defines a first inner race 129. The first inner ring 120 is disposed in the outer ring 140 opposite the first outer race 146. The first inner ring 120 is disposed in the outer ring 140 opposite the second outer race 146. The second inner ring 130 is disposed in the outer ring 140 opposite the second outer race 148.

A first plurality of rolling elements 150, for example ball bearings is disposed between in a first cavity defined between the first inner race 129 and the first outer race 146. Each of the plurality of first rolling elements 150 has a first radius of curvature R_{B} and a first circumference. A second plurality of rolling elements 160, for example ball bearings is disposed in a second cavity defined between the second inner race 139 and the second outer race 148. Each of the plurality of second rolling elements 160 has a second radius of curvature R_{B} and a second circumference. Each of the plurality of first rolling elements 150 has a first radius of curvature R_{B} and a first circumference. The first inner ring 120 is rotatable relative to the outer ring 140 about the central axis A. The first plurality of rolling elements 150 rollingly engages the first inner race 139 and the first outer race 146. The second inner ring 130 is rotatable relative to the outer ring 140 about the central axis A. The second plurality of rolling elements 160 rollingly engages the second inner race 139 and the second outer race 146. The first inner ring 120 is rotatable relative to the second inner ring 130 about central axis A. In one embodiment, the first plurality of rolling elements 150 and the second plurality of rolling elements 160 includes a plurality of generally spherical balls.

One slug separator 170 is disposed between and separates each adjacent pair of the first rolling elements 150. One second slug separator 180 is disposed between and separates each adjacent pair of the second rolling elements 160. The first plurality of slug separators 170 is disposed between the first inner race 129 and the first outer race 146. The second plurality of slug separators 180 is disposed between the second inner race 149 and the second outer race 148.

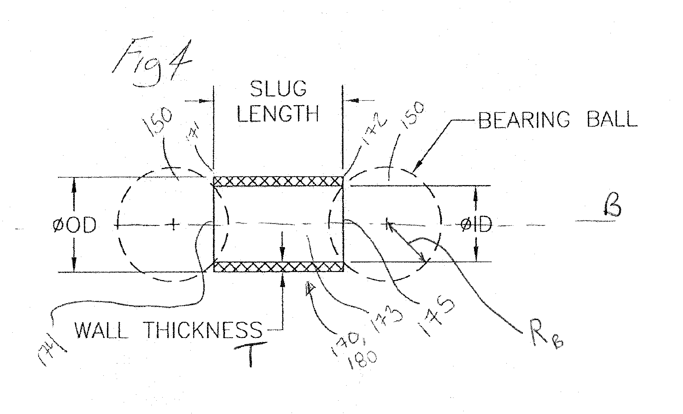

In reference to FIG. 4, the slug separators 170, 180 and rolling elements 150, 160 are arranged so that one slug separator 170, 180 is disposed between and slidingly engage each rolling element 150, 160, respectively, thereby separating adjacent rolling elements 150, 160 from one another. Each of the rolling elements 150, 160 has a radius R_{B}. Each of the rolling elements 150, 160 has a circumference defined by two times the radius R_{B} times π (i.e., π equals about 3.1428). In one embodiment the rolling elements 150 have a different radius R_{B} than the rolling elements 160.

In the embodiment shown in FIG. 4, the slug separators 170 extend between a first end 171 and a second end 172. The slug separator 170 defines a bore 173 therethrough between a first opening 174 and a second opening 175. A slug length is defined as the distance between the first end 171 and the second end 172. The slug separator 170 is generally annular about an axis B as shown in FIG. 4, wherein axis B extends between the first opening 174 and the second opening 175. The slug separator 170 has an outer diameter and an inner diameter. The difference between the outer diameter and the inner diameter correspondences to twice the wall thickness T of the slug separator 170. The slug separators 180 are configured similar to the slug separators 170. While the slug separator 170 is shown as having a flat face, i.e., tubular, the present invention is not limited in this regard. For example, the face of the slug separator may be parabolic, or some other shape, to enhance the interface with the adjacent rolling element 150, 160.

The slug separators 170, 180 are sized to space adjacent pairs of the rolling elements 150, 160 apart from one another by a predetermined distance. As shown in FIG. 1, each of the rolling elements 150, 160 are spaced apart from one another by the slug separators 170, 180 an angle α. In one embodiment the angle α is 15 degrees plus or minus one degree. While the adjacent pairs of the rolling elements 150, 160 are described as being spaced apart from one another by a the angle α of 15 degrees, the present invention is not limited in this regard as the angle α may be less than or greater than 15 degrees, including but not limited to 5, 10, 11, 12, 13, 14, 16, 17, 18, 19 20, 21, 22, 23, 24 or 25 degrees.

In the embodiment shown, the slug separators 170, 180 are made from flexible inert plastics. For example, the slug separators are cut from stocks of tubing or hosing. In one embodiment, the slug separators 170 are formed from a synthetic polymeric material such as bearing grade PEEK (poly ether ether ketone) and/or other material e.g., PTFE (polytetrafluoroethylene), polyimide, etc. It should be understood the slug configuration described above is provided for illustration purposes and is not intended to limit the scope of the disclosure as many different slug and ball configurations may be employed with the present invention. Use of plastic and tubular type slug separators 170, 180 facilitates weight reduction in the bearing 100.

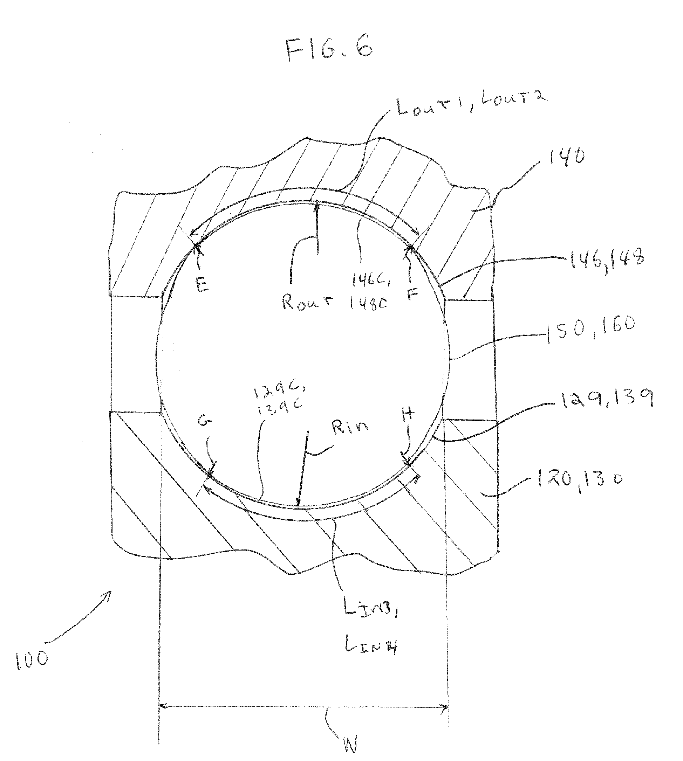

By using individual slug separators 170, 180 inserted between adjacent rolling elements 150, 160, additional space is provided, as compared to a bearing using a ball separator cage to space the balls. As a result of the additional space provided through use of the slug separators 170, 180, it is possible to use rolling members having a greater diameter as opposed to a similar sized bearing in which a separator cage is employed. For example, as shown in FIG. 6 the first and second inner races 129, 139 and the first and second outer races 146, 148 have a width W of .512 inch. Thus, rolling elements 150, 160 having a diameter of 0.3125 to 0.5 inch are used. Increasing the size of the rolling elements increases the load capacity and life of the bearing 100 by increasing the contact surface between the rolling elements 150, 160 as described further herein with reference to FIG. 6. It has been shown that bearing life/longevity is a cubical function of its load capacity. As a result, increasing the diameter of the rolling elements 150, 160 to 0.3125 to 0.5, for example, increases the life of the bearing 100, compared to other bearings using small rolling elements. By using the slug separators 170, 180 inserted between the rolling elements 150, 160 additional space is provided that would normally be filled by the separator cage. Therefore, using tubular slugs, rolling elements 150, 160 having a diameter of up to about 0.5 inches are used. The rolling element 150, 160 size increase from 1/4" to ½" increases the load capacity of the bearing by 2.6 times that of a caged design. It should be understood that the diameter of the spherical rolling elements 150 used in the first inner and outer races 129, 146 and the diameter of the rolling elements 160 used in the second inner and outer race 139, 148 may be the same or may be different. Likewise, it should be understood that the length and diameter of the slug separators 170 used in the first inner and outer races 129, 146 and the slug separators 180 used in the second inner and outer races 139, 148 may be the same or may be different.

While first and second inner races 129, 139 and the first and second outer races 146, 148 are described has having the width W of .512 inch and rolling elements 150, 160 having the diameter of 0.3125 to 0.5 inch, the present invention is not limited in this regard as races and rolling elements of any size and configuration may be employed, including but not limited to races and rolling elements as described herein with reference to FIG. 6.

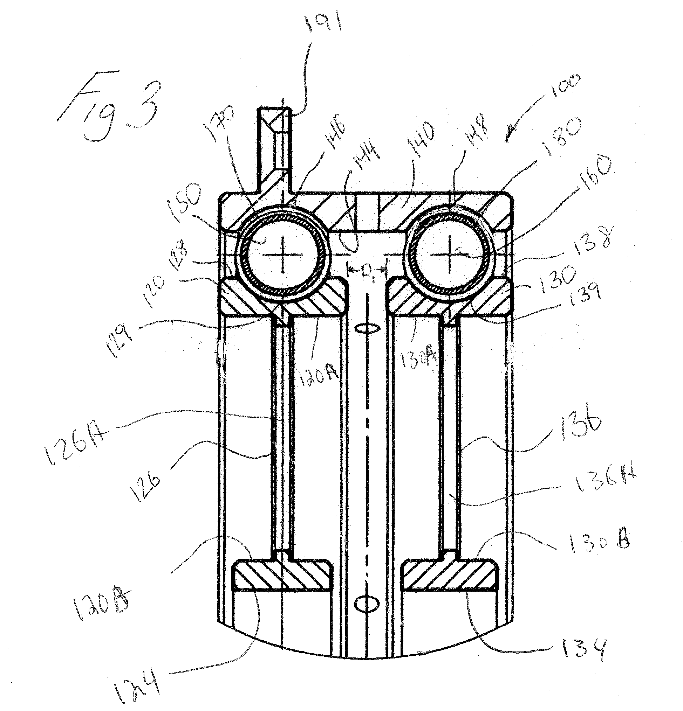

Referring to FIG. 6, the outer ring 140 defines the first outer race 146 and a second outer race 148. The first outer race 146 defines a first arcuate surface 146C extending a first length L_{OUT1} from point E to point F. The second outer race 148 defines second arcuate surface 148C extending a second length L_{OUT2} from point E to point F. The first inner ring 120 is disposed in the outer ring 140 opposite the first outer race 146 (as shown in FIG. 3). The first inner ring 120 defines the first inner race 129. The first inner race 129 defines a third arcuate surface 129C extending a third length L_{IN3} from point G to point H. The second inner ring 130 is disposed in the outer ring 140 (as shown in FIG. 3) opposite the second outer race 148. The second inner ring 130 defines a second inner race 139. The second inner race 139 defines a fourth arcuate surface 148C extending a fourth length L_{IN4} from point G to point H. The first arcuate surface 146C and the third arcuate surface 129C define a thin line of contact with each of the rolling elements 150. The second arcuate surface 148C and the fourth arcuate surface 139C define a thin line of contact with each of the rolling elements 160.

Thirty percent of the first circumference of at least one of the plurality of first rolling 150 elements engages the first arcuate surface 146C and thirty percent of the first circumference of at least one of the plurality of first rolling elements 150 engages the third arcuate surface 129C. In one embodiment, thirty percent of the second circumference of at least one of the plurality of second rolling elements 160 engages the second arcuate surface 148C and thirty percent of the second circumference of at least one of the plurality of second rolling elements 160 engages the fourth arcuate surface 139C. In one embodiment forty percent of the first circumference of at least one of the plurality of first rolling 150 elements engages the first arcuate surface 146C and forty percent of the first circumference of at least one of the plurality of first rolling elements 150 engages the third arcuate surface 129C. In one embodiment, forty percent of the second circumference of at least one of the plurality of second rolling elements 160 engages the second arcuate surface 148C and forty percent of the second circumference of at least one of the plurality of second rolling elements 160 engages the fourth arcuate surface 139C.

While thirty or forty percent of the first circumference of at least one of the plurality of first rolling 150 elements engages the first arcuate surface 146C and thirty or forty percent of the first circumference of at least one of the plurality of first rolling elements 150 engages the third arcuate surface 129C and thirty or forty percent of the second circumference of at least one of the plurality of second rolling elements 160 engages the second arcuate surface 148C and thirty or forty percent of the second circumference of at least one of the plurality of second rolling elements 160 engages the fourth arcuate surface 139C, the present invention is not limited in this regard as greater percentages (e.g., 45, 46, 47, 48, and 49 percent) of the circumference of the rolling elements 150, 160 can engage one or more of the first arcuate surface 146C, the second arcuate surface 148C, the third arcuate surface 129C and the fourth arcuate surface 148C.

Referring to FIG. 6, the first arcuate surface 146C of the first outer race 146 defines a first radius of curvature R_{OUT} and the second arcuate surface 148C of the second outer race 148 defines second radius of curvature R_{OUT}. The first inner ring 120 is disposed in the outer ring 140 opposite the first outer race 146. The third arcuate surface 129C of the first inner ring 120 defines a first inner race 129 which has a third radius of curvature R_{IN}. The second inner ring 130 defines a second inner race 139 which has a fourth radius of curvature R_{IN}. The first radius of curvature R_{OUT} , second radius of curvature R_{OUT}, third radius of curvature R_{IN} and fourth radius of curvature R_{IN} are substantially equal to one another. In one embodiment, the first radius of curvature R_{OUT}, second radius of curvature R_{OUT}, third radius of curvature R_{IN} and fourth radius of curvature R_{IN} have different magnitudes. In one embodiment, the first radius of curvature R_{OUT}, second radius of curvature R_{OUT}, third radius of curvature R_{IN} and fourth radius of curvature R_{IN} extend the full width W, as shown in FIG. 6.

The bearing 100 has a first aspect ratio defined by the radius R_{B} of one of the rolling elements 150 divided by either of the first radius of curvature R_{OUT} of the first outer race 146 or and the third radius of curvature R_{IN} of the a first inner race 129. The bearing 100 has a second aspect ratio defined by radius R_{B} of one of the rolling elements 160 divided by either of the one of the second radius of curvature R_{OUT} of the second outer race 148 or the fourth radius of curvature R_{IN} of the second inner race 139. The first aspect ratio and/or the second aspect ratio is at least 0.6. In one embodiment, the first aspect ratio and/or the second aspect ratio is at least 0.7. In one embodiment, the first aspect ratio and/or the second aspect ratio is at least 0.8. In one embodiment, the first aspect ratio and/or the second aspect ratio is at least 0.9.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A bearing for a hub-mounted vibration suppression system comprising:
an outer ring defining a first outer race and a second outer race;
a first inner ring disposed in the outer ring opposite the first outer race, the first inner ring defining a first inner race;
a second inner ring disposed in the outer ring opposite the second outer race, the second inner ring defining a second inner race;
a plurality of first rolling elements disposed in a first cavity defined between the first inner race and the first outer race;
a plurality of first slug separators, wherein one of the plurality of first slug separators is disposed between and separates each adjacent pair of the plurality of first rolling elements;
a plurality of second rolling elements disposed in a second cavity defined between the second inner race and the second outer race;
a plurality of second slug separators, wherein one of the plurality of second slug separators is disposed between and separates each adjacent pair of the plurality of second rolling elements; and
at least one of:
a) each of the plurality of first rolling elements have first centers that are spaced apart from one another by no more than 15 degrees and
b) each of the plurality of second rolling elements have second centers that are spaced apart from one another by no more than 15 degrees.

2. A bearing for a hub-mounted vibration suppression system comprising:
an outer ring defining a first outer race and a second outer race, the first outer race defining a first arcuate surface and the second outer race defining second arcuate surface;
a first inner ring disposed in the outer ring opposite the first outer race, the first inner ring defining a first inner race, the first inner race defining a third arcuate surface;
a second inner ring disposed in the outer ring opposite the second outer race, the second inner ring defining a second inner race, the second inner race defining a fourth arcuate surface;
a plurality of first rolling elements disposed in a first cavity defined between the first inner race and the first outer race, each of the plurality of first rolling elements having a first radius of curvature and a first circumference;
a plurality of first slug separators, wherein one of the plurality of first slug separators is disposed between and separates each adjacent pair of the plurality of first rolling elements;
a plurality of second rolling elements disposed in a second cavity defined between the second inner race and the second outer race, each of the plurality of second rolling elements having a second radius of curvature and a defining a second circumference;
a plurality of second slug separators, wherein one of the plurality of second slug separators is disposed between and separates each adjacent pair of the plurality of second rolling elements; and
at least one of:
a) at least 30 percent of the first circumference of at least one of the plurality of first rolling elements engages the first arcuate surface and at least 30 percent of the first circumference of at least one of the plurality of first rolling elements engages the third arcuate surface; and
b) at least 30 percent of the second circumference of at least one of the plurality of second rolling elements engages the second arcuate surface and at least 30 percent of the second circumference of at least one of the plurality of second rolling elements engages the fourth arcuate surface.

3. The bearing of claim 2 wherein at least 40 percent of the first circumference of at least one of the plurality of first rolling elements engages the first arcuate surface and at least 40 percent of the first circumference of at least one of the plurality of first rolling elements engages the third arcuate surface.

4. The bearing of one of claims 2 or 3 wherein at least 40 percent of the second circumference of at least one of the plurality of second rolling elements engages the second arcuate surface and at least 40 percent of the second circumference of at least one of the plurality of second rolling elements engages the fourth arcuate surface.

5. A bearing for a hub-mounted vibration suppression system comprising:
an outer ring defining a first outer race and a second outer race, the first outer race defining a first radius of curvature and the second outer race defining second radius of curvature;
a first inner ring disposed in the outer ring opposite the first outer race, the first inner ring defining a first inner race, the first inner race defining a third radius of curvature;
a second inner ring disposed in the outer ring opposite the second outer race, the second inner ring defining a second inner race, the second inner race defining a fourth radius of curvature;
a plurality of first rolling elements disposed in a first cavity defined between the first inner race and the first outer race, each of the plurality of first rolling elements having a fifth radius of curvature and a first circumference;
a plurality of first slug separators, wherein one of the plurality of first slug separators is disposed between and separates each adjacent pair of the plurality of first rolling elements;
a plurality of second rolling elements disposed in a second cavity defined between the second inner race and the second outer race, each of the plurality of second rolling elements having a sixth radius of curvature and a defining a second circumference;
a plurality of second slug separators, wherein one of the plurality of second slug separators is disposed between and separates each adjacent pair of the plurality of first rolling elements;
at least one of:
the bearing having a first aspect ratio defined by the fifth radius of curvature divided by one of the first radius of curvature and the third radius of curvature;
the bearing having a second aspect ratio defined by the sixth radius of curvature divided by one of the second radius of curvature and the fourth radius of curvature; and
at least one of:
- the first aspect ratio is at least 0.6; and
- the second aspect ratio is at least 0.6.

6. The bearing of claim 5 wherein the first aspect ratio is at least 0.8.

7. The bearing of one of claims 5 or 6 wherein the second aspect ratio is at least 0.8.

8. The bearing of one of claims 5 to 7, wherein at least one of:
each of the plurality of first rolling elements have first centers that are spaced apart from one another by no more than 15 degrees and
each of the plurality of second rolling elements have second centers that are spaced apart from one another by no more than 15 degrees.

9. The bearing of one of claims 1 to 8, comprising a first mount extending radially inward from an inner surface defined by the first inner ring, the first mount being configured to receive balancing magnets.

10. The bearing of one of claims 1 to 9, comprising a second mount extending radially inward from an inner surface defined by the second inner ring, the second mount being configured to receive at least a portion of the hub-mounted vibration suppression system.

11. The bearing of one of claims 1 to 10, wherein the slug separator is substantially tubular and extends between a first end and a second end.

12. The bearing of claim 11, wherein the slug separator comprises a bore extending between the first end and the second end, the bore having a first opening at or proximate to the first end and the bore having a second opening at or proximate to the second end.

13. The bearing of one of claims 1 to 12, wherein the slug separator comprises a synthetic polymeric material.
